**Europäisches Patentamt**

**European Patent Office**

**Office européen des brevets**

(19)

(11) Veröffentlichungsnummer: **0 121 840**
A2

## (12) EUROPÄISCHE PATENTANMELDUNG

(21) Anmeldenummer: **84103195.8**

(51) Int. Cl.³: **G 06 K 11/06,** G 08 B 13/22

(22) Anmeldetag: **22.03.84**

(30) Priorität: **01.04.83 US 468104**

(71) Anmelder: **Siemens Aktiengesellschaft, Berlin und München Wittelsbacherplatz 2, D-8000 München 2 (DE)**

(43) Veröffentlichungstag der Anmeldung: **17.10.84 Patentblatt 84/42**

(72) Erfinder: **Tsikos, Constantine J., 5316 King Avenue, Pennsauken New Jersey 08109 (US)**

(84) Benannte Vertragsstaaten: **AT CH DE FR GB IT LI NL**

(54) **Anordnung zur Feststellung der Lage eines Gegenstandes innerhalb eines Sichtfeldes.**

(57) Zur Feststellung der Lage eines Gegenstandes innerhalb eines Sichtfeldes, z.B. eines Bildschirms, sind punktförmige Strahlungsquellen entfernt voneinander am Umfang des Sichtfeldes (10) angeordnet. Weiterhin ist der Umfang des Sichtfeldes (10) mit einer zurückreflektierenden Fläche (14) versehen. Die zurückreflektierende Fläche (14) reflektiert die Strahlung, die von den punktförmigen Strahlungsquellen ausgehen, zu diesen Strahlungsquellen zurück. Strahlungsempfänger (36, 38) sind jeweils benachbart zu den Strahlungsquellen angeordnet, so daß sie in der von der zurückreflektierenden Fläche (14) zurückreflektierten Strahlung liegen. Ist ein Gegenstand (26) im Sichtfeld (10) angeordnet, dann wird dieser Gegenstand auf den Strahlungsempfängern (36, 38) abgebildet. Aus der Lage dieser Abbildung auf den Strahlungsempfängern (36, 38) können die Koordinaten des Gegenstandes (26) innerhalb des Sichtfeldes (10) berechnet werden.

ACTORUM AG

0121840

Siemens Aktiengesellschaft          Unser Zeichen
Berlin und München                  VPA 83 P 7403 E

Anordnung   zur Feststellung der Lage eines Gegenstandes
innerhalb eines Sichtfeldes

Die Erfindung bezieht sich auf eine Anordnung , zur Feststellung der Lage eines Gegenstandes innerhalb eines Sichtfeldes. Ein solcher Gegenstand kann ein Finger oder Bleistift sein, mit dem auf eine bestimmte Stelle eines Bildschirmes z.B. eines Sichtgerätes gedeutet wird und dessen Vorhandensein und Lage festgestellt werden soll. Die Anordnung kann auch verwendet werden, um das Vorhandensein einer Person innerhalb eines umgrenzten Bereiches, z.B. eines Zimmers, festzustellen.

Bekannte Vorrichtungen zur Feststellung der Lage eines Gegenstandes innerhalb eines Sichtfeldes tasten die Unterbrechung einer Strahlung, z.B. von Licht, durch einen undurchsichtigen Gegenstand, z.B. den Teil eines menschlichen Körpers, ab. Eine solche Vorrichtung verwendet Strahlungssender, die Strahlung über das Sichtfeld, und zwar parallel zu der Oberfläche des Sichtfeldes, ausstrahlen und Strahlungsempfänger, die die Strahlung, die sich über das Sichtfeld ausgebreitet hat, erfassen und das Vorhandensein und die Lage einer Unterbrechung dieser Strahlung (z.B. durch einen Gegenstand) erkennen.

Eine bekannte Vorrichtung zur Feststellung der Lage eines kleinen  Gegenstandes, z.B. eines menschlichen Fingers oder eines Bleistiftes, in einer X-Y Ebene verwendet eine Anordnung von Lichtquellen, die entlang einer in X-Richtung liegenden Seite eines rechteckförmigen Sichtfeldes liegen und eine  entsprechende  Anordnung von Lichtempfänger, die auf der gegenüberliegenden in X-Richtung verlaufenden Seite des Sichtfeldes vorgesehen sind. Entsprechend ist eine Anordnung von Lichtquellen entlang der in Y-Richtung verlaufenden Seite des Sichtfeldes und eine Anordnung von Lichtempfängern auf der gegenüberliegenden ebenfalls in Y-Richtung verlaufenden Seite des Sichtfeldes vorgesehen. Somit sind entlang des Umfangs des Sichtfeldes jeweils Lichtsender oder Lichtempfänger angeordnet. Beispiele für solche Vorrichtungen sind in den US-Patentschriften 3 478 220, 3 764 813, 3 775 560 und 3 860 754 offenbart.

Die bekannten Vorrichtungen haben eine Reihe von Nachteilen. Erstens wird die räumliche Auflösung der Vorrichtung durch die Anzahl, die Größe und den Abstand der einzelnen Lichtquellen und Lichtempfänger festgelegt. Bei bekannten Vorrichtungen ist es daher möglich, daß ein menschlicher Finger zwischen zwei benachbarten Lichtempfängern liegt und somit von den parallel verlaufenden Strahlen des Lichtes nicht erfaßt wird. Zweitens weist die bekannte Vorrichtung eine große Anzahl von aktiven Elementen, z.B. Lichtquellen und Lichtempfängern, auf, die sehr teuer sind und in den meisten Fällen durch menschliche Arbeitskraft sehr genau montiert werden müssen. Drittens erzwingt die große Anzahl von Lichtquellen und Lichtempfängern komplexe und aufwendige Anordnungen von Schaltkreisen, die zum Betrieb der Vorrichtung erforderlich sind.

Eine andere Art einer Vorrichtung zur Feststellung der Lage eines Gegenstandes ist aus der US-Patentschrift 4 144 449 bekannt. Diese Vorrichtung umfaßt einen rechteckigen Rahmen mit vier Seiten und einen offenen Innenraum für die Arbeitsfläche oder das Sichtfeld. Auf dem Rahmen sind Lampen angeordnet, die von drei Seiten aus Licht in den Innenraum des Rahmens emittieren. Ein paar Lichtempfänger sind am Rahmen in zwei Ecken und zwar an den entgegengesetzt liegenden Enden der vierten Seite des Rahmens angeordnet. Weiterhin sind Öffnungen in den zwei Rahmenecken, und zwar zwischen den Lichtempfängern und dem Rahmeninneren vorgesehen, um übereinstimmende Lichtbereiche für die Lichtempfänger festzulegen. Jeder Lichtempfänger empfängt das Licht von einem besonderen Lichtfeld innerhalb des Rahmeninneren und stellt die Unterbrechung des Lichtes an irgendeinen Ort dieses Feldes fest. Die bekannte Vorrichtung nach dem US-Patent 4 144 449 hat den Vorteil gegenüber dem bereits oben beschriebenen Vorrichtungen, die paarweise angeordnete Lichtquellen und Lichtempfänger aufweisen, daß die Anzahl der Komponenten erheblich reduziert wird, während die Auflösung der Vorrichtung vergrößert wird.

Trotzdem erfordert die bekannte Vorrichtung einen verhältnismäßig großen Rahmen und eine größere Anzahl von Lichtquellen, die zumindest auf drei Seiten des Rahmens angeordnet sind. Deshalb ist die Vorrichtung sehr groß und unhandlich und ist daher nicht geeignet, nachträglich an einem bereits vorhandenen Bildschirm angeordnet zu werden.

Weiterhin ist die Anwendbarkeit der bekannten Vorrichtung auf verhältnismäßig kleine Lichtfelder, z.B. Computerbildschirme, begrenzt. Sie ist nicht geeignet, um die Lage von Gegenständen innerhalb eines großen Sichtfeldes, z.B. eines Raumes in einem Gebäude, festzustellen. Es ist zwar theoretisch denkbar, eine lineare Lichtquelle entlang den Mauern eines Raumes anzuordnen, derartige Lichtquellen wären aber extrem teuer, zufälligen Zerstörungen ausgesetzt und wären ästhetisch nicht ansprechend.

Es wäre somit wünschenswert, eine Vorrichtung entsprechend der US-Patentschrift 4 144 449 zur Verfügung zu haben, mit der sowohl die Lage von Gegenständen in großen als auch in kleinen Sichtfeldern feststellbar ist. Die Vorrichtung wäre dann z.B. anwendbar zur Überwachung von Räumen. Sie könnte aber auch in Verbindung mit mechanischen automatischen Einrichtungen verwendet werden. Dann könnte die Vorrichtung das Abschalten der Einrichtung bewirken, wenn z.B. ein Mensch den Arbeitsbereich der mechanischen Einrichtung betritt.

Die der Erfindung zugrundeliegende Aufgabe besteht darin, eine Anordnung zur Feststellung der Lage eines Gegenstandes innerhalb eines Sichtfeldes anzugeben, die einfach im Aufbau ist und leicht nachträglich in ein bestehendes Sichtfeld eingefügt werden kann. Dabei soll die Anordnung sowohl für kleine Sichtfelder, wie Computerbildschirme, als auch für verhältnismäßig große Sichtfelder, wie ein Raum in einem Gebäude, verwendbar sein.

Diese Aufgabe wird durch folgende Merkmale gelöst:
Eine erste, im wesentlichen punktförmige Strahlungsquelle ist an einem ersten Ort auf dem Umfang des Sichtfeldes angeordnet, um das Sichtfeld auszuleuchten,
eine zurückreflektierende Fläche ist am Umfang angeordnet, um die von der Strahlungsquelle auftreffende Strahlung zur Strahlungsquelle zurückzureflektieren,
eine erste Einrichtung ist auf dem Umkreis benachbart zur ersten Strahlungsquelle so angeordnet, daß sie im Bereich der von der zurückreflektierenden Fläche reflektierten Strahlung liegt,
die erste Einrichtung tastet das Sichtfeld in einer ersten Richtung ab und speichert beim Vorhandensein eines Gegenstandes im Sichtfeld ein dessen Lage in der ersten Richtung entsprechenden ersten Wert ab.

Die erfindungsgemäße Anordnung erzeugt somit mit Hilfe von mindestens einer punktförmigen Strahlungsquelle, die z.B. als LED ausgeführt sein kann, Strahlung, die das Sichtfeld ausleuchtet und von der zurückreflektierenden Fläche zu der punktförmigen Lichtquelle zurückreflektiert wird. Die reflektierte Strahlung wird von einem benachbart zu der punktförmigen Strahlungsquelle angeordneten Strahlungsempfänger empfangen und ausgewertet, es sei denn, die Strahlund wird von einem Gegenstand im Sichtfeld unterbrochen.

-5-

Die zurückreflektierende Fläche kann z.B. aus einem zurückreflektierenden Band bestehen, das im Handel zur Verwendung
als Straßenrandreflektoren und ähnlichem verfügbar ist. Die
Oberfläche dieses Bandes ist aus einer Schicht aus dünnen
transparenten Kugeln gebildet, z.B. aus Glas. Das Band ist
verhältnismäßig billig und kann auf einfache Weise an den
Seiten oder Wänden des Sichtfeldes befestigt werden. Das
Sichtfeld kann deshalb verhältnismäßig klein sein, wie z.B.
im Fall eines Computerbildschirmes oder verhältnismäßig groß,
wie im Fall eines Gebäuderaumes.

Die Anordnung kann einen elektronischen Schaltkreis umfassen, der mit den Strahlungsempfängern verbunden ist, um die
Koordinaten des Gegenstandes, der innerhalb des Sichtfeldes
angeordnet ist, zu bestimmen. Z.B. kann das Sichtfeld rechteckig sein und der elektrische Schaltkreis kann dann Signale
erzeugen, die proportional sind der X- und Y-Koordinate des
Gegenstandes innerhalb des Sichtfeldes.

Die bei der Anordnung verwendete Strahlung ist vorzugsweise Licht; wenn jedoch Umgebungslicht die Arbeitsweise der
Anordnung stören könnte, kann Strahlung nicht sichtbarer
Frequenzen wie Infrarot- oder Mikrowellenstrahlung verwendet
werden.

Vorzugsweise können zwei Strahlungsempfänger an benachbarten
Ecken des rechteckigen Sichtfeldes angeordnet sein. Soll jedoch eine verbesserte Auflösung erreicht werden, können drei
oder mehr Strahlungsempfänger am Umfang des Sichtfeldes vorgesehen werden.

Der elektrische Schaltkreis zur Bestimmung der Koordinaten
eines innerhalb des Sichtfeldes angeordneten Gegenstandes
kann die Lage des Gegenstandes in zwei Dimensionen (X, Y-
Koordinaten) oder in drei Dimensionen (X, Y, Z-Koordinaten) angeben. Die Angabe von drei Dimensionen hat den Vorteil,
daß der Gegenstand, der in das Sichtfeld in Z-Richtung eintritt (z.B. ein Finger zeigt gegen einen Computerbildschirm)
nur erkannt wird, wenn seine Z-Koordinate eine Schwelle überschreitet.

Weiterhin kann der elektrische Schaltkreis derart realisiert
sein, daß er die Lage nur von solchen Gegenständen anzeigt,
die eine bestimmte Größe überschreiten. Auf diese Weise können Rauschen und uninteressante kleine Gegenstände unterdrückt werden.

Weiterbildungen der Erfindung ergeben sich aus den Unteransprüchen.

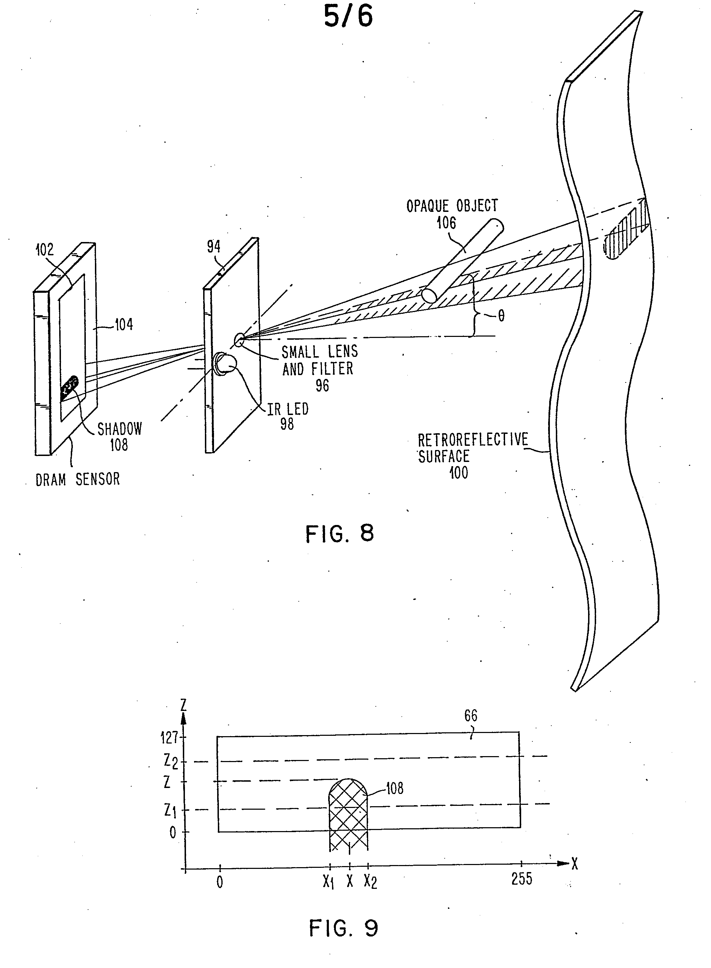

Anhand von Ausführungsbeispielen, die in den Figuren dargestellt sind, wird die Erfindung weiter erläutert. Es zeigen
Fig. 1 einen Grundriß der Anordnung,
Fig. 2 eine schematische Darstellung der Arbeitsweise der
       Anordnung,
Fig. 3 eine schematische Darstellung der Arbeitsweise der
       zurückreflektierenden Fläche,
Fig. 4 eine perspektivische Ansicht des optischen Systems,
       das in der Anordnung  verwendet wird,
Fig. 5 ein Blockschaltbild des elektrischen Schaltkreises,
       der in der Anordnung  verwendet wird,
Fig. 6 ein Diagramm, das die Filterfunktion des Schaltkreises nach Fig. 5 erläutert,
Fig. 7 ein Blockschaltbild einer zweiten Ausführungsform des
       elektrischen Schaltkreises,
Fig. 8 eine perspektivische Ansicht einer weiteren Ausführungsform des optischen Systems, das in Fig. 1 verwendbar ist,
Fig. 9 ein zwei Koordinaten-Diagramm, das die Funktion des
       dynamischen RAM Bildbausteins im Ausführungsbeispiel
       der Fig. 8 zeigt,

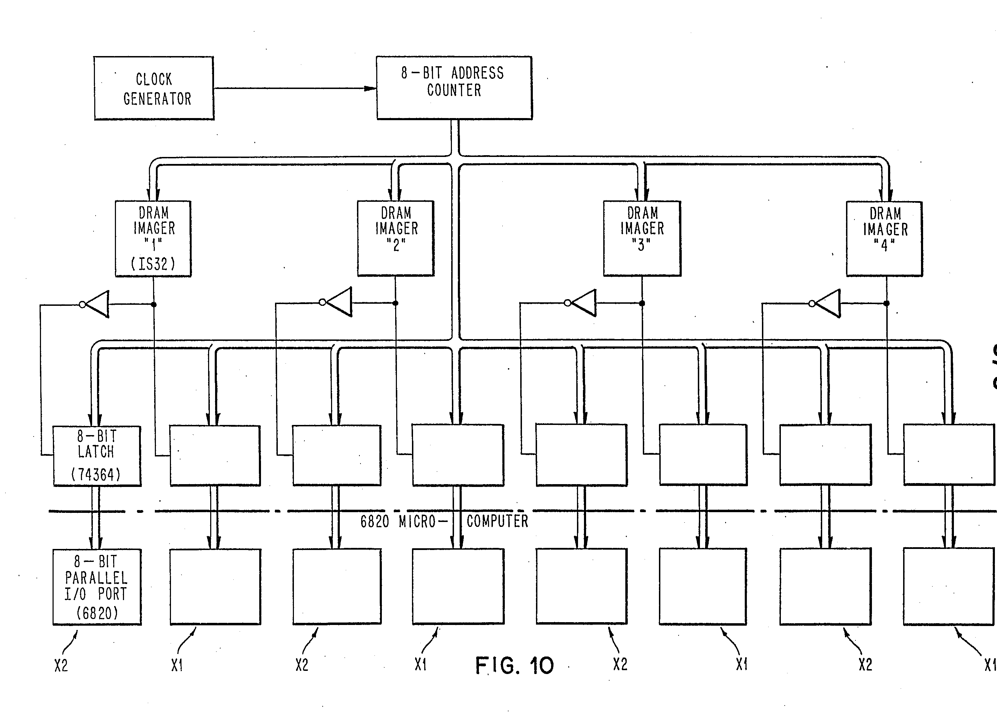

Fig. 10 ein Blockschaltbild einer dritten Ausführung des elektronischen Schaltkreises, der in der Anordnung verwendbar ist.

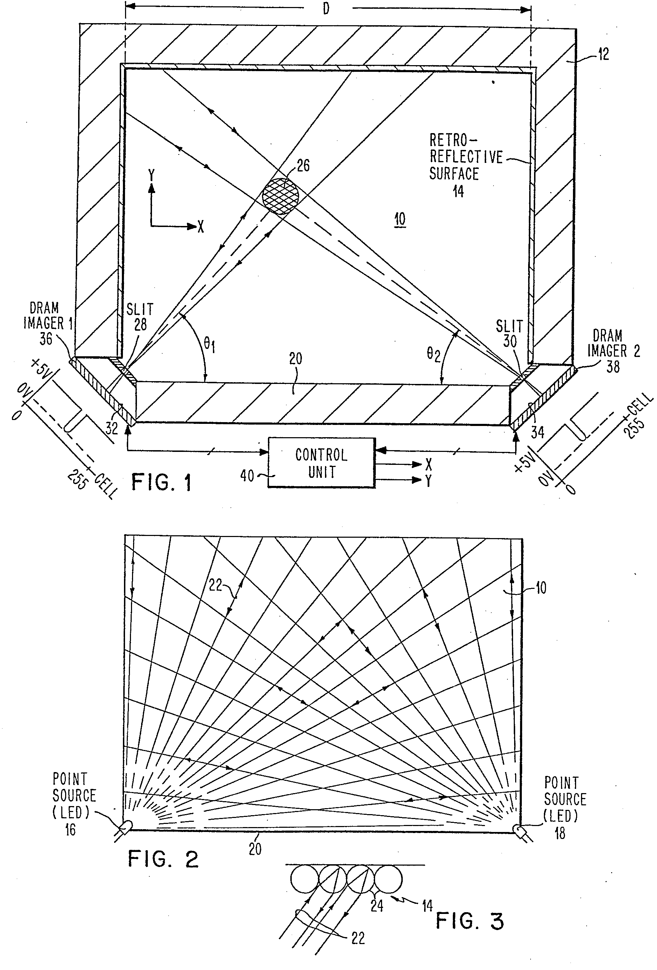

Fig. 1 zeigt einen Computerbildschirm, der ein Sichtfeld 10 aufweist, das von einem Rahmen 12 umgeben ist. Die innere Oberfläche des Rahmens 12, die im wesentlichen vertikal zur Sichtfläche des Bildschirms 10 verläuft, ist mit einer zurückreflektierenden Schicht 14 versehen. Die Schicht 14 sieht eine zurückreflektierende Fläche vor, die am Umfang des Sichtfeldes verläuft. Die zurückreflektierende Fläche ist eine Fläche, die von einer Strahlungsquelle erzeugte Strahlung zur Strahlungsquelle zurückreflektiert.

Die zurückreflektierende Schicht 14 kann direkt am Rahmen 12 angebracht sein oder sie kann auf einem aufklebbaren Band angeordnet sein, das an der inneren Oberfläche des Rahmens befestigt wird. Entsprechende zurückreflektierende Bänder sind fertig im Handel erhältlich.

Die Vorrichtung enthält weiterhin zwei im wesentlichen punktförmige Strahlungsquellen. Diese Strahlungsquellen sind in Fig. 1 nicht dargestellt. Sie sind aber in Fig. 2 gezeigt, in der ihre Lage in Beziehung zum Sichtfeld 10 dargestellt ist. Aus Fig. 2 ergibt sich, daß eine erste Strahlungsquelle 16 an einer Ecke des Sichtfeldes 10 und eine zweite Strahlungsquelle 18 an einer anderen, zweiten Ecke einer Seitenfläche 20 angeordnet ist. Die Seitenfläche 20 des Sichtfeldes muß nicht mit einer zurückreflektierenden Schicht, wie in Fig. 1 gezeigt, versehen sein.

Nach Fig. 2 beleuchten die punktenförmigen Strahlungsquellen das gesamte Sichtfeld mit Strahlung, z.B. mit Licht. Die Strahlung breitet sich dabei in einer Richtung parallel zu der Ebene des Sichtfeldes 10 aus. Die zurückreflektierende Fläche am Umfang des Sichtfeldes reflektiert die Strahlung zurück zur entsprechenden Strahlungsquelle, wie es in der Fig. 2 durch die Pfeile im Sichtfeld gezeigt ist. Zum Beispiel erstreckt sich ein Strahl 22 von der Strahlungsquelle 16, z.B. einer LED, zu der Seite des Sichtfeldes und kehrt zu der Strahlungsquelle zurück.

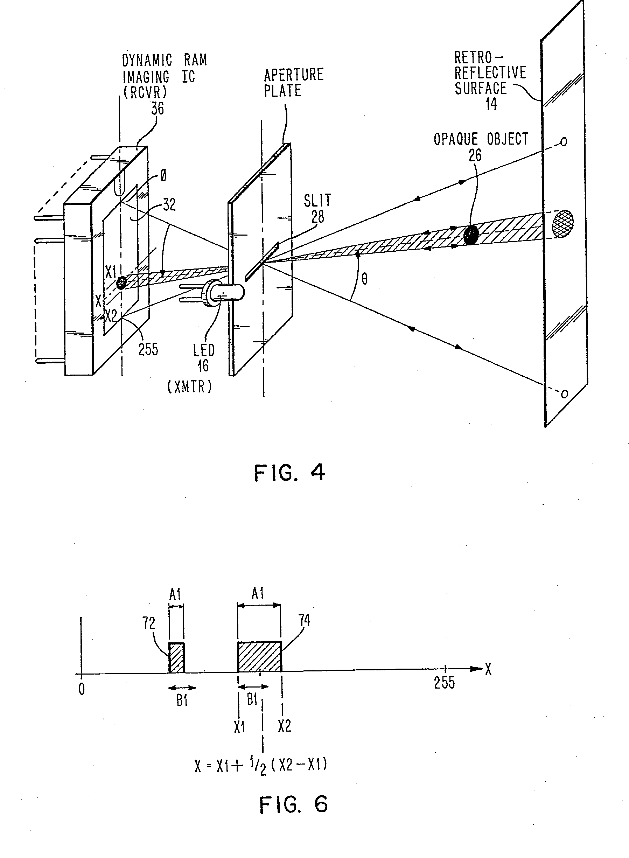

Fig. 3 zeigt, wie die Strahlen 22 zu ihren Strahlungsquellen durch die zurückreflektierende Schicht 14 reflektiert werden. Die Schicht 14 besteht dabei aus einer Mehrzahl von kleinen, transparenten Kugeln 24, die als winzige Linsen und Spiegeln wirken, die die auftreffenden Strahlen reflektieren und sicherstellen, daß der Ausgangswinkel der gleiche ist wie der Eingangswinkel.

Fig. 1 zeigt, wie die Vorrichtung das Vorhandensein und die Lage eines Gegenstandes 26 innerhalb der Umgrenzung des Rahmens 12 feststellt. Es wird angenommen, daß Strahlung, z.B. Licht, von punktförmigen Strahlungsquellen, z.B. LEDs an der unteren linken und an der unteren rechten Ecke des Sichtfeldes erzeugt wird (so wie es in der Fig. 2 dargestellt ist); dieses Licht durchquert das Sichtfeld und wird zurückreflektiert zu einem Spalt 28 in der linken unteren Ecke und zu einem Spalt 30 in der rechten unteren Ecke des Sichtfeldes 10. Die Spalten 28 und 30 dienen als optische Blenden, um einzelne Strahlen auf empfindlichen Flächen 32 und 34 eines dynamischen RAM Bildbausteins 36 abzubilden. Diese und 38, werden von einem elektrischen Schaltkreis 40 abgefragt, der Ausgangssignale abgibt, die proportional sind zu den X,Y-Koordinaten des Gegenstandes 26.

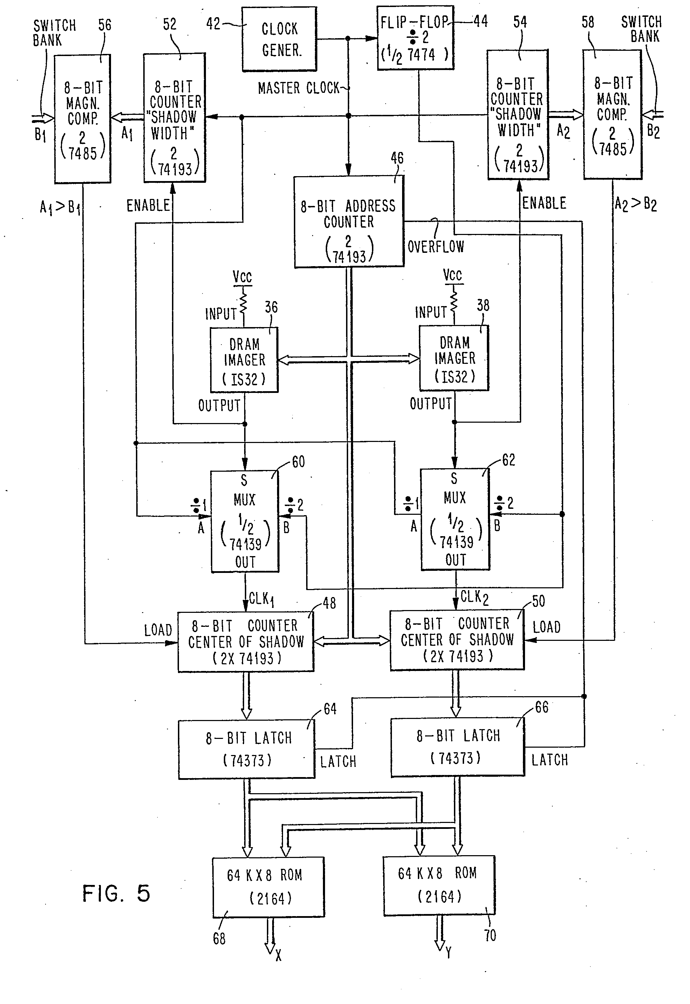

Die Arbeitsweise der Anordnung zur Feststellung der Lage eines Gegenstandes läßt sich am besten verstehen mit Hilfe der Fig. 4 und 5. Fig. 4 zeigt ein Abbildungssystem, bei dem die Strahlung aus Licht besteht, erzeugt von einem LED und Fig. 5 zeigt ein Blockschaltbild der Steuereinheit 40. Wie Fig. 4 entnommen werden kann, wird Licht, das von dem LED 16 erzeugt wird, durch die zurückreflektierende Fläche 14 zu dieser Quelle zurückreflektiert. Das Licht durchquert dabei den Spalt 28 und trifft auf der Fläche 32 des dynamischen RAM Bildbausteins 36 auf. Das Licht entlädt auf der Oberfläche 32 einen lichtempfindlichen Kondensator und erzeugt dabei eine logische Null im Speicher an jeder Speicherstelle, die Licht empfängt. Wenn ein undurchsichtiger Gegenstand, wie z.B. ein Bleistift oder ein menschlicher Finger, in das Sichtfeld eingeführt wird, dann wird ein Schatten auf den Bildbaustein geworfen und die Kondensatoren innerhalb des abgeschatteten Bereiches behalten ihre Ladung. Der Bildbaustein erzeugt so eine logische 1 am Ausgang für jede Speicherzelle innerhalb des abgeschatteten Bereiches.

Der dynamische RAM Bildbaustein kann z.B. aus 256 Zellen (0 bis 255) bestehen, die in einer Linie entlang der Wandlerfläche angeordnet sind. Es sei angenommen, daß X die Position des Schattens eines undurchsichtigen Gegenstandes 26 auf der Wandlerfläche 32 im dynamischen RAM darstellt; dann ist X proportional zu dem Winkel, den der undurchsichtige Gegenstand durch den Spalt hindurch mit der nullten Zelle bildet. Unter der Annahme, daß die entgegengesetzten Seiten des Schattens auf Positionen X1 und X2 ($0 \le X1 \le X2 \le 255$) fallen, dann liegt der Mittelwert X oder das Zentrum des Schattens bei $(X1 + X2)/2$.

Wenn eine Kombination von zwei Lichtquellen und zwei dynamischen Bausteinen verwendet wird, wie dies in den Fig. 1 und 2 dargestellt ist, dann kann die X, Y Lage des Gegenstandes 26 mit Hilfe der sog. "Triangulation" bestimmt werden. In diesem Falle werden zwei Winkel $\theta 1$ und $\theta 2$ gemessen und die X,Y Koordinaten aus den Werten dieser zwei Winkel unter Verwendung des Abstandes D zwischen den zwei Meßpunkten berechnet.

Fig. 5 zeigt ein Ausführungsbeispiel der elektrischen Steuereinheit 40 zur Bestimmung der X, Y Koordinaten aus der Information, die von den dynamischen RAM Bausteinen abgegeben wird. Diese Schaltung verwendet das Prinzip des Tabellenlesens, um die Koordinaten aufzusuchen. Die Schaltung enthält einen Taktgenerator 42, der Taktimpulse zu einem Frequenzunterteiler (Flip Flop) 44 und einem Adressenzähler 46 sendet. Der Ausgang des Adressenzählers 46 ist mit den beiden dynamischen RAM Bausteinen 36 und 38 und weiterhin mit zwei 8 bit Zählern 48 und 50 verbunden. Die Taktimpulse vom Taktgenerator 42 werden weiterhin zu zwei 8 bit Zählern 52 und 54 übertragen, die Ausgangszahlen A1 und A2 erzeugen. Die Ausgänge der Zähler 52 und 54 sind mit 8 bit Komparatoren 56 und 58 jeweils verbunden, die die Ausgangszahlen A1 und A2 mit Zahlen B1 und B2 vergleichen. Die Zahlen B1 und B2 können der Steuereinheit 40 von Kippschaltern oder von einem Computer zugeführt werden.

Die Taktimpulse vom Taktgenerator 42 und vom Frequenzteiler 44 werden zwei Multiplexern 60 und 62 zugeführt. Die Multiplexer sind mit ihren Eingängen jeweils mit den dynamischen RAM Bausteinen 36 und 38 und mit ihren Ausgängen jeweils mit den Zählern 48 und 50 verbunden. Die Ausgänge der dynamischen RAM Bausteine 36 und 38 sind weiterhin jeweils mit den Zählern 52 und 54 verbunden.

Die Inhalt der 8 bit Zähler 48 und 50 werden jeweils in 8 bit Auffangregister 64 und 66 übertragen, wenn ein Übertragimpuls von dem 8 bit Adressenzähler 46 abgegeben wird. Die Inhalte der beiden Auffangregister 64 und 66 werden verwendet, um zwei 64 K x 8 ROM 68 und 70 zu adressieren.

Durch die Schaltung nach Fig. 5 werden die Zellen der dynamischen RAM Bausteine 36 und 38 aufeinanderfolgend adressiert. Die Ausgangssignale dieser Zellen (logisch 0 für Zellen, die Licht erhalten haben und logisch 1 für Zellen, die kein Licht erhalten haben) werden zu den 8 bit Zählern 48 und 50 in folgender Weise übertragen:

Jede Zelle mit einer logischen 0 wird dadurch gezählt, daß der Taktimpuls vom Eingang A des jeweiligen Multiplexers zu dem Takteingang des jeweiligen Zählers 48 oder 50 übertragen wird. Jede andere Speicherzelle mit einer logischen 1 wird dadurch gezählt, daß der Taktimpuls halber Frequenz vom Eingang B des jeweiligen Multiplexers zu dem Takteingang des jeweiligen Zählers 48 oder 50 übertragen wird. Die Zähler 48 und 50 werden jedes Mal auf 0 zurückgesetzt, wenn die erste Zelle (Zelle 0) des dynamischen RAM Bausteins 36 und 38 adressiert wird. Die Zähler 48 und 50 werden gestoppt, wenn an ihren Ladeeingängen Signale von den jeweiligen Komparatoren 56 und 58 auftreten. Die Inhalte der Zähler 48 und 50 werden dann in die jeweiligen Auffangregister 64 und 66 übertragen, wenn der 8 bit Adressenzähler 46 die Adressenzahl 255 erreicht.

Die Zähler 52 und 54 und die Komparatoren 56 und 58 dienen dazu, um solche Schatten zu eliminieren, die eine Minimumbreite nicht überschreiten. Die Zahlen A1 und A2, die die Breiten der Schatten, die den jeweiligen RAM Bausteinen 36 und 38 zugeführt werden, darstellen, werden jeweils mit festgelegten Zahlen B1 und B2 verglichen, die z.B. in einem Bereich von 30 bis 50 (Bildelementbreite) von Gegenständen liegen, die durch die RAM Bausteine 36 und 38 erkennbar sein sollen. Wenn die Schatten eine Breite (in Zahlen der Speicherzellen) haben, die kleiner ist als dieser Wert (B1 oder B2) dann werden sie ignoriert.

Dementsprechend erzeugen die Zähler 48 und 50 ein Zählergebnis X, das die Position (in Bildelementen) des Zentrums des Gegenstandes darstellt. Unter der Annahme, daß X1 die niedrigere Speicherzellenadresse der einen Seite des Schattens und X2 die höhere Speicherzellenadresse der entgegengesetzten Seite des Schattens ist (Fig. 4), dann wird das Zählergebnis X nach folgender Formel festgelegt:

$$X = X1 + 1/2 (X2 - X1)$$

Die Zähler 48 und 50 zählen zunächst die Zahlen X1 mit der ursprünglichen Taktfrequenz und zählen dann die Zahlen $1/2 (X2 - X1)$ mit der halben Taktfrequenz.

Die ROM Speicher 68 und 70 enthalten die jeweiligen Koordinaten X und Y, die den jeweiligen Werten in den Auffangregistern 64 bzw. 66 entsprechen. Die Koordinatenwerte können am besten durch manuelle Eichung des Systems festgelegt werden. Dazu wird ein Gegenstand in das Sichtfeld an bekannten Koordinaten X und Y angeordnet. Diese Koordinaten werden dann in die jeweiligen ROM Speicher 68 und 70 unter der Adresse, die von dem System erzeugt wird, eingespeichert. Mit Hilfe eines Kurvenschreibers kann die Eichung auch automatisch für alle Adressen durchgeführt werden.

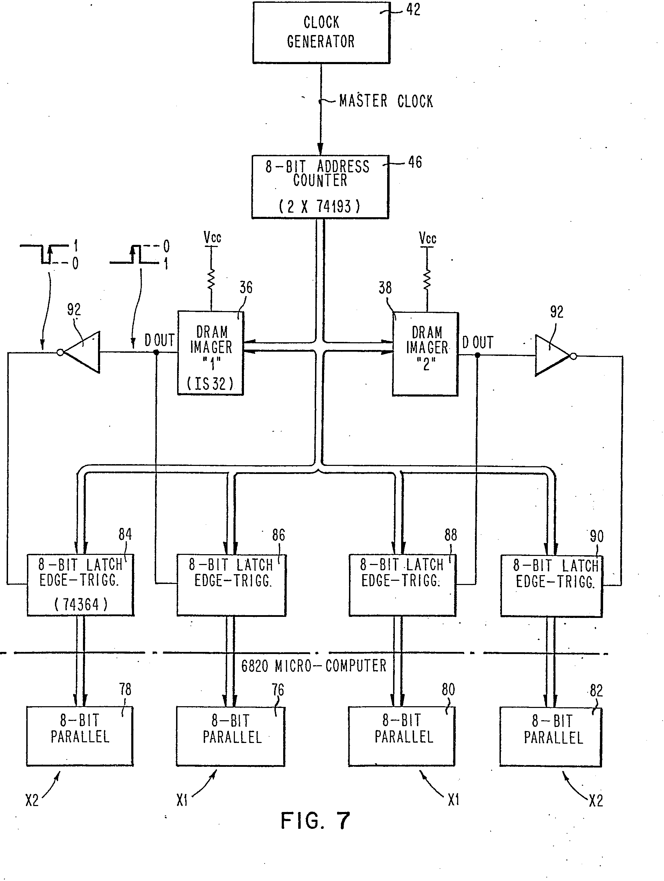

Fig. 6 zeigt, auf welche Weise zu schmale Schatten ausgeblendet werden. Zunächst stellt die Steuereinheit einen ersten Schatten 72 mit einer Breite A1 fest, die kleiner ist als die Minimumbreite B1. Dieser Schatten wird ignoriert. Das System findet anschließend einen zweiten Schatten 74 mit einer Breite A1, die größer ist als die Minimumbreite B1. In diesem Fall bestimmt das System die Adresse des Zentrums des Punktes $X = X1 + 1/2 (X2 - X1)$ und diese Adresse wird dem ROM Speicher 68 zugeführt, um die Koordinate X mit Hilfe eines Tabellenvorgangs zu finden.

Fig. 7 zeigt eine andere Ausführungsform der Steuereinheit 40. Bei dieser Steuereinheit werden die X und Y Koordinaten mit Hilfe eines Mikroprozessors bestimmt, der mit einer entsprechenden Software arbeitet. Die niedrigere Adresse (X1) des Schattens wird vom einen dynamischen RAM Baustein 36 zu einem ersten 8 bit parallelen Eingangs/Ausgangsport 76 übertragen. Die höhere Adresse (X2) des Schattens wird zu einem zweiten Eingangs/Ausgangsport 78 übertragen. Entsprechend wird die niedrigere Adresse (X1) eines Schattens, die vom anderen dynamischen RAM Baustein 38 erzeugt wird, zum Eingangs/Ausgangsport 80 und entsprechend die höhere Adresse (X2) des Schattens zum Eingangs/Ausgangsport 82 übertragen. Die niedrigeren und höheren Adressen werden durch Triggern der 8 bit Auffangregister 84, 86, 88 und 90 mit den Anstiegsflanken der Impulse ausgewählt. Wenn ein Schatten durch einen dynamischen RAM Baustein gesehen wird, dann ändert sich das Ausgangspotential des Bausteins von einem niedrigeren Wert zu einem höheren Wert; Inverter 92 werden dazu verwendet, um Impulse mit Anstiegsflanken zu erzeugen, die von niedrigeren zum höheren Potential beim Übergang von einem abgedunkelten Bereich zu einem Lichtbereich wechseln.

Fig. 8 zeigt ein weiteres Ausführungsbeispiel, bei dem eine Anordnung von 128 x 256 Zellen in einem dynamischen RAM Baustein verwendet wird, um eine zweite, die Z Dimension des Schattens, der von einem undurchsichtigen Gegenstand gebildet wird, festzulegen. In diesem Falle enthält die Blendenplatte 94 eine kleine Linse 96. Der Infrarotstrahlung, die von der Quelle 98 (LED) erzeugt wird, wird von der zurückreflektierenden Fläche 100 durch die Linse 96 zur Wandlerfläche 102 des dynamischen RAM Bausteins 104 reflektiert. Ein undurchsichtiger Gegenstand 106, z.B. ein Finger, bildet einen Schatten 108 auf der Fläche 102. Die Extenz und die Lage dieses Schattens, die schematisch in Fig. 9 dargestellt ist, wird durch Adressieren der Zellen des RAM Bausteins 104 bestimmt.

Der Steuerschaltkreis zum Adressieren der Zellen des RAM Bausteins 104 ist ähnlich aufgebaut wie es in Fig. 7 gezeigt ist. In diesem Falle kann ein 16 bit Adreßzähler anstatt des 8 bit Adreßzählers 46 verwendet werden, um die 128 x 256 Zellen jedes RAM Bausteines zu adressieren. Der Mikrocomputerspeicher muß ebenfalls entsprechend größer sein, um die zusätzlichen, dritten Koordinaten zu speichern.

Es ist ebenfalls möglich, Strahlungsquellen und dynamische RAM Bausteine in allen vier Ecken des Sichtfeldes anzuordnen. In diesem Falle sollte eine zurückreflektierende Fläche entlang des gesamten Umfangs des Sichtfeldes gegeben sein. Diese Anordnung hat zwei besondere Vorteile:
1. Der undurchsichtige Gegenstand im Sichtfeld, der nahe einem RAM Baustein liegt, wird von diesem RAM Baustein als extrem langer Schatten gesehen. Vorzugsweise wird ein solch langer Schatten ignoriert ebenso wie extrem kurze Schatten ignoriert werden und zur Bestimmung der Koordinaten des Gegenstandes werden nur die Schatten der mittleren Größe verwendet.
2. Wenn das Sichtfeld eine unübliche Form hat oder undurchsichtige Hindernisse in ihrem Rahmen hat, kann mit Hilfe von 4 RAM Bausteinen das gesamte Sichtfeld erfaßt werden.

Fig. 10 zeigt eine Steuereinheit, die zur Adressierung von 4 dynamischen RAM Bausteinen im Parallelbetrieb geeignet ist. Die Stellen der Schattenecken (Zellen X1 und X2) werden wiederholt in 8 bit Auffangregistern gespeichert und werden den jeweiligen 8 bit parallel Eingangs/Ausgangsports des Mikroprozessors angeboten.

10 Figuren
21 Patentansprüche

Patentansprüche

1. Anordnung zur Feststellung der Lage eines Gegenstandes innerhalb eines Sichtfeldes g e k e n n z e i c h n e t durch folgende Merkmale:
a) eine erste, im wesentlichen punktförmige Strahlungsquelle (16) ist an einem ersten Ort auf dem Umfang des Sichtfeldes (10) angeordnet, um das Sichtfeld auszuleuchten,
b) eine zurückreflektierende Fläche (14) ist am Umfang des Sichtfeldes angeordnet, um die von der ersten Strahlungsquelle (16) auftreffende Strahlung zur Strahlungsquelle zurückzureflektieren,
c) eine erste Einrichtung ist auf dem Umfang des Sichtfeldes (10) benachbart zur ersten Strahlungsquelle (16) so angeordnet, daß sie im Bereich der von der zurückreflektierenden Fläche (14) reflektierten Strahlung liegt,
d) die erste Einrichtung (36) tastet das Sichtfeld (10) in einer ersten Richtung ab und speichert beim Vorhandensein eines Gegenstandes (26) im Sichtfeld ein dessen Lage in der ersten Richtung entsprechenden ersten Wert ab.

2. Anordnung nach Anspruch 1, g e k e n n z e i c h - n e t durch folgende Merkmale:
e) eine zweite, im wesentlichen punktförmige Strahlungsquelle (18) ist an einem zweiten Ort am Umfang des Sichtfeldes (10) angeordnet, um das Sichtfeld auszuleuchten,
f) eine zweite Einrichtung ist am Umfang des Sichtfeldes (10) benachbart zur zweiten Strahlungsquelle (18) so angeordnet, daß sie im Bereich der von der zurückreflektierenden Fläche (14) reflektierten Strahlung liegt,
g) die zweite Einrichtung (38) tastet das Sichtfeld (10) in einer zweiten Richtung ab und speichert bei Vorhandensein eines Gegenstandes (26) im Sichtfeld ein dessen Lage in der zweiten Richtung entsprechenden zweiten Wert ab.

3. Anordnung nach Anspruch 2, dadurch g e k e n n -
z e i c h n e t , daß eine Steuereinheit (40) vorgesehen
ist, die aus dem ersten und dem zweiten Wert die Koordinaten des Gegenstandes innerhalb des Sichtfeldes (10) bestimmt.

4. Anordnung nach Anspruch 2 oder 3, dadurch g e -
k e n n z e i c h n e t , daß der erste bzw. zweite Wert
aus einer einzigen Größe besteht.

5. Anordnung nach Anspruch 4, dadurch g e k e n n -
z e i c h n e t , daß die Größe abhängt vom Winkel zwischen der kürzesten Verbindungslinie, die zwischen dem Gegenstand (26) und der Einrichtung (36, 38) denkbar ist, und
einer Seitenfläche (20) des Umfangs der Sichtfläche (10).

6. Anordnung nach einem der vorhergehenden Ansprüche,
dadurch g e k e n n z e i c h n e t , daß die Strahlungsquellen (16, 18) Licht abgeben.

7. Anordnung nach einem der Ansprüche 1 bis 5, dadurch
g e k e n n z e i c h n e t , daß die Strahlungsquellen
(16, 18) infrarote Strahlung abgeben.

8. Anordnung nach einem der Ansprüche 1 bis 5, dadurch
g e k e n n z e i c h n e t , daß die Strahlungsquellen
(16, 18) Mikrowellenstrahlung abgeben.

9. Anordnung nach einem der vorhergehenden Ansprüche,
dadurch g e k e n n z e i c h n e t , daß das Sichtfeld (10) aus einem Computerbildschirm besteht.

10. Anordnung nach einem der Ansprüche 1 bis 8, dadurch
g e k e n n z e i c h n e t , daß das Sichtfeld zumindest
aus einem Teil eines Raums besteht.

11. Anordnung nach einem der Ansprüche 3 bis 10, dadurch g e k e n n z e i c h n e t , daß das Sichtfeld (10) rechteckig ausgeführt ist.

12. Anordnung nach Anspruch 11, dadurch g e k e n n - z e i c h n e t , daß zwischen den Koordinaten (X, Y) ein rechter Winkel gegeben ist.

13. Anordnung nach einem der Ansprüche 3 bis 12, dadurch g e k e n n z e i c h n e t , daß die erste und zweite Einrichtung (36, 38) an zwei benachbarten Ecken des rechteckigen Sichtfeldes (10) angeordnet ist.

14. Anordnung nach Anspruch 13, dadurch g e k e n n - z e i c h n e t , daß eine dritte, im wesentlichen punktförmige Strahlungsquelle an einer dritten Ecke des rechteckigen Sichtfeldes (10) angeordnet ist, um das Sichtfeld auszuleuchten, daß eine dritte Einrichtung an dem Umfang des Sichtfeldes benachbart zur dritten Strahlungsquelle so angeordnet ist, daß sie im Bereich der von der zurückreflektierenden Fläche (14) reflektierten Strahlung liegt, daß die dritte Einrichtung das Sichtfeld (10) in einer dritten Richtung abtastet und bei Vorhandensein des Gegenstandes im Sichtfeld ein dessen Lage in der dritten Richtung entsprechenden dritten Wert abspeichert und daß die Steuereinheit (40) zusätzlich den dritten Wert zur Berechnung der Koordinaten des Gegenstandes im Sichtfeld verwendet.

15. Anordnung nach Anspruch 14, dadurch g e k e n n - z e i c h n e t , daß eine vierte im wesentlichen punktförmige Strahlungsquelle an einer vierten Ecke des rechteckigen Sichtfeldes (10) angeordnet ist, um das Sichtfeld auszuleuchten, das eine vierte Einrichtung auf dem Umfang des Sichtfeldes benachbart zur vierten Strahlungsquelle so angeordnet ist, daß sie im Bereich der von der zurückreflektierenden Fläche (14) reflektierten Strahlung liegt, daß die vierte Einrichtung das Sichtfeld (10) in einer vierten Richtung abtastet und bei Vorhandensein des Gegenstandes (26) im Sichtfeld ein dessen Lage in der vierten Richtung entsprechenden vierten Wert abspeichert und daß die Steuereinheit (40) zusätzlich mit dem vierten Wert die Koordinaten des Gegenstandes (26) im Sichtfeld (10) bestimmt.

16. Anordnung nach Anspruch 13, dadurch  g e k e n n  - z e i c h n e t  , daß die zurückreflektierende Fläche (14) an drei Seiten des rechteckigen Sichtfeldes (10) angeordnet ist, dagegen an der Seite des Sichtfeldes fehlt, die zwischen den beiden Ecken mit den Strahlungsquellen (16, 18) bzw. ersten und zweiten Einrichtungen (36, 38) angeordnet ist.

17. Anordnung nach Anspruch 15, dadurch  g e k e n n  - z e i c h n e t  , daß die zurückreflektierende Fläche (14) an allen vier Seiten des rechteckigen Sichtfeldes (10) angeordnet ist.

18. Anordnung nach einem der Ansprüche 3 bis 13, dadurch  g e k e n n z e i c h n e t  , daß die Steuereinheit (40) die X, Y-Koordinaten eines Gegenstandes bestimmt, der auf einer zweidimensionalen Ebene im Sichtfeld liegt.

19. Anordnung nach einem der Ansprüche 3 bis 13, dadurch  g e k e n n z e i c h n e t  , daß der erste und der zweite Wert mit Hilfe von zwei senkrecht zueinander stehenden Koordinaten festgelegt wird und die Steuereinheit (40) die dreidimensionale Lage eines Gegenstandes bestimmt, der im Sichtfeld (10) angeordnet ist.

20. Anordnung nach einem der vorhergehenden Ansprüche, dadurch  g e k e n n z e i c h n e t  , daß die Steuer-

einheit (40) annäherungsweise die Mitte des Gegenstandes, der im Sichtfeld liegt, bestimmt.

21. Anordnung nach einem der Ansprüche 3 bis 13, dadurch g e k e n n z e i c h n e t , daß die Steuereinheit (40) die Koordinaten eines im Sichtfeld angeordneten Gegenstandes (26) nur dann angibt, wenn der Gegenstand eine festlegbare Größe übersteigt.

FIG. 1

FIG. 2

FIG. 3

0121840

DYNAMIC RAM
IMAGING IC
(RCVR)
36

APERTURE
PLATE

RETRO—
REFLECTIVE
SURFACE
14

Ø

32

OPAQUE OBJECT
26

SLIT
28

X1

X

X2

θ

255

LED
16
(XMTR)

FIG. 4

A1

A1

72

74

0

B1

B1

X1

X2

255

X

$$X = X1 + \frac{1}{2}(X2 - X1)$$

FIG. 6

0121840

SWITCH BANK

56 — 8-BIT MAGN. COMP. $\left(\frac{2}{7485}\right)$ — $B_1$

52 — 8-BIT COUNTER "SHADOW WIDTH" $\left(\frac{2}{74193}\right)$ — $A_1$

42 — CLOCK GENER.

MASTER CLOCK

44 — FLIP-FLOP $\div 2$ ($\frac{1}{2}$ 7474)

54 — 8-BIT COUNTER "SHADOW WIDTH" $\left(\frac{2}{74193}\right)$ — $A_2$

58 — 8-BIT MAGN. COMP. $\left(\frac{2}{7485}\right)$ — $B_2$

SWITCH BANK

$A_1 > B_1$

ENABLE

46 — 8-BIT ADDRESS COUNTER $\left(\frac{2}{74193}\right)$

OVERFLOW

ENABLE

$A_2 > B_2$

Vcc — INPUT — 36 — DRAM IMAGER (IS32) — OUTPUT

Vcc — INPUT — 38 — DRAM IMAGER (IS32) — OUTPUT

60 — S MUX $\left(\frac{1}{2} \ 74139\right)$ OUT — $\div 1$ A — $\div 2$ B

62 — S MUX $\left(\frac{1}{2} \ 74139\right)$ OUT — $\div 1$ A — $\div 2$ B

$CLK_1$

$CLK_2$

LOAD — 48 — 8-BIT COUNTER CENTER OF SHADOW (2X 74193)

50 — 8-BIT COUNTER CENTER OF SHADOW (2X 74193) — LOAD

64 — 8-BIT LATCH (74373) — LATCH

66 — 8-BIT LATCH (74373) — LATCH

68 — 64 K X 8 ROM (2164) — X

70 — 64 K X 8 ROM (2164) — Y

FIG. 5

4/6    0121840

FIG. 7

0121840

OPAQUE OBJECT
106

θ

SMALL LENS
AND FILTER
96

IR LED
98

RETROREFLECTIVE
SURFACE
100

102

104

SHADOW
108

DRAM SENSOR

94

FIG. 8

Z

127

Z2

Z

Z1

0

66

108

0   X1 X X2   255   X

FIG. 9

FIG. 10